# EUROPÄISCHE PATENTSCHRIFT

(11) **EP 2 715 018 B1**
(45) Veröffentlichungstag und Bekanntmachung des Hinweises auf die Patenterteilung: **12.07.2017**
(21) Anmeldenummer: 12734782.1
(22) Anmeldetag: 26.05.2012
(51) Int. Cl.: E05B 53/00, E05B 81/24, E05B 81/20, E05B 79/20, F16H 21/44

(54) **BETÄTIGUNGSVORRICHTUNG**
ACTUATING DEVICE
DISPOSITIF D'ACTIONNEMENT

(30) Priorität: 28.05.2011 DE 202011101230 U
(43) Veröffentlichungstag der Anmeldung: 09.04.2014
(73) Patentinhaber: Kiekert Aktiengesellschaft, 42579 Heiligenhaus (DE)
(72) Erfinder: NASS, Ulrich, 45475 Mülheim/Ruhr (DE); BARMSCHEIDT, Christian, 47178 Duisburg (DE); FUCHS, Carsten, 40597 Benrath (DE); GRAUTE, Ludger, 45130 Essen (DE)
(74) Vertreter: Struck, Norbert
(86) Internationale Anmeldenummer: PCT/DE2012/000561
(87) Internationale Veröffentlichungsnummer: WO 2012/163330

(56) Entgegenhaltungen:
- EP-A1- 0 304 357
- EP-A1- 0 745 746
- EP-A1- 0 879 926
- WO-A1-99/61735
- US-A- 5 918 917
- US-A- 6 123 372

## Beschreibung

Die Erfindung betrifft ein Türschloss mit einer Betätigungsvorrichtung zur gemeinsamen Beaufschlagung von wenigstens zwei verschiedenen Elementen des Türschlosses mit zumindest einem Seilzug mit Seele und Hülle,
wobei der Seilzug mit wenigstens zwei Kraftübertragungseinheiten in ihrer Längserstreckung ausgerüstet ist, welche zur Wechselwirkung mit einerseits einem ersten Element und andererseits einem zweiten Element bei Beaufschlagung des Seilzuges eingerichtet sind, und wobei das eine der beiden Elemente als Betätigungshebel ausgebildet ist.

Betätigungsvorrichtungen für Kraftfahrzeug-Türschlösser weisen üblicherweise eine Handhabe, beispielsweise einen Innentürgriff und/oder Außentürgriff auf, mit dessen Hilfe einzelne Elemente im Innern des Kraftfahrzeug-Türschlosses, im Beispielfall ein Innenbetätigungshebel und/oder ein Außenbetätigungshebel, beaufschlagt werden. Mit dem Innenbetätigungshebel und/oder Außenbetätigungshebel steht im Allgemeinen ein Auslösehebel in mechanischer Wirkverbindung. Mit Hilfe des Auslösehebels wird regelmäßig eine Sperrklinke von ihrem Eingriff mit einer Drehfalle abgehoben, so dass die Drehfalle federunterstützt Öffnen kann und einen zuvor gefangenen Schließbolzen freigibt. Als Folge hiervon kann die mit dem betreffenden Kraftfahrzeug-Türschloss ausgerüstete Kraftfahrzeugtür geöffnet werden.

Im gattungsbildenden Stand der Technik nach der DE 10 2007 012 684 A1 wird bei einer Betätigungsvorrichtung des eingangs beschriebenen Aufbaus so vorgegangen, dass durch Erzeugung einer Zugkraft an der Seele des Seilzuges eine Schlossbaugruppe betätigt wird. In diesem Zusammenhang können entsprechend dem dortigen Ausführungsbeispiel nach Fig. 5 auch zwei unterschiedliche Hebel gleichzeitig eine Beaufschlagung mit Hilfe der Seele erfahren. Zu diesem Zweck sind voneinander beabstandete Seilnippel an die Seele angeschlossen. Im Kern geht es hier darum, insbesondere eine Schiebetür bei einem Kraftfahrzeug in einer bestimmten (geöffneten) Position zu arretieren.

Der weitere Stand der Technik nach der DE 43 27 782 A1 befasst sich mit einer Türverschlussvorrichtung mit einem Ein-Bewegungs-Türöffnungsmechanismus. Zu diesem Zweck ist die Seele eines Seilzuges mit einem Flansch in Eingriff und verfügt darüber hinaus über ein Druckbauteil. Durch diese Vorgehensweise wird schließlich ein Innenverriegelungsknopf in eine unverriegelte Position überführt. Das heißt, bei Beaufschlagung eines Innenöffnungsgriffes bzw. Innentürgriffes wird die zugehörige Türöffnungsbetätigung sogar dann durchgeführt und vorgenommen, wenn sich das Kraftfahrzeug-Türschloss noch in verriegeltem Zustand befindet. Denn dann arbeitet die Seele des Seilzuges derart, dass der unverriegelte Zustand eingenommen wird und zugleich eine Türöffnung bewerkstelligt.

Die bekannten Maßnahmen haben sich grundsätzlich bewährt, sind allerdings zum Teil konstruktiv aufwendig gestaltet. Im Übrigen stellen sich heutzutage bei Kraftfahrzeug-Türschlössern ergänzende Anforderungen, die bisher nicht ausreichend Berücksichtigung gefunden haben. So sind aktuell Kraftfahrzeug-Türschlösser oftmals mit ergänzenden Zuzieh-/Öffnungseinrichtungen ausgerüstet, die momentan (noch) in hochpreisigen Automobilen eingesetzt werden, möglicherweise in der Zukunft aber den Massenmarkt erschließen.

Eine Zuzieheinrichtung dient üblicherweise dazu, dass mit Hilfe eines herkömmlichen Elektromotors für eine motorische Zuziehung an einer Klappe oder Tür gesorgt wird. Als Folge hiervon wird das Gesperre des Kraftfahrzeug-Türschlosses, also üblicherweise die Kombination aus Sperrklinke und Drehfalle, nach Erreichen einer bestimmten Funktionsstellung, meistens der Vorraststellung, in seine Endstellung respektive Hauptraststellung überführt. Daraus resultiert eine besonders komfortable Vorgehensweise, weil ein Bediener die zugehörige Tür oder Klappe lediglich in die Vorraststellung verbringen muss und dann die Zuzieheinrichtung für den vollständigen Schließvorgang sorgt. Ein Beispiel für eine solche Zuzieheinrichtung beschreibt das Gebrauchsmuster DE 20 2008 007310 U1 der Anmelderin, bei dem der Antrieb für die Zuzieheinrichtung als Linearantrieb ausgebildet ist und auf einem Hebel arbeitet, welcher drehgelenkig mit einer Zuziehklinke verbunden ist. Die Zuziehklinke greift in eine Kontur an der Drehfalle ein und bewirkt die gewünschte Zuziehbewegung.

Grundsätzlich sind auch Öffnungshilfen bekannt, die sicherstellen, dass ein zugehöriges Gesperre des Kraftfahrzeug-Türschlosses motorisch geöffnet werden kann. Ein Beispiel für eine solche Öffnungseinrichtung bzw. Öffnungshilfe wird in der DE 10 2004 052 599 A1 beschrieben. Auch hier geht es primär darum, eine Komfortverbesserung zu erreichen.

Ferner werden weitere Kraftfahrzeugschlösser in den Dokumenten US6123372A und EP0304357A1 offenbart.

Bei den bekannten Zuzieheinrichtungen bzw. Öffnungseinrichtungen können sich Probleme dann ergeben, wenn beispielsweise beim Zuziehen eine Jacke, ein Mantel oder ein vergleichbares Bekleidungsstück oder auch ein Körperteil des Bedieners in den Spalt zwischen der sich schließenden Tür und einer Kraftfahrzeugkarosserie gelangt. Dieser Umstand führt im Regelfall dazu, dass die Zuzieheinrichtung abgeschaltet wird. Intuitiv geht ein Bediener in einem solchen Fall jedoch so vor, dass er den Außentürgriff beaufschlagt und erwartet, dass die Zuzieheinrichtung unmittelbar wirkungslos wird und zugleich die Kraftfahrzeugtür eine Öffnung erfährt, um das eingeklemmte Teil freizugeben. Hier fehlen bisher überzeugende Lösungen, die diesen Bedienungswunsch auf konstruktiv einfache Art und Weise abbilden und widerspiegeln.

Der Erfindung liegt das technische Problem zugrunde, ein derartiges Türschloss mit Betätigungsvorrichtung so weiterzuentwickeln, dass bedienungs- und sicherheitsproblematische Zustände bei Zuzieh- oder Öffnungseinrichtungen mit geringem Aufwand vermieden werden.

Zur Lösung dieser technischen Problemstellung ist ein Türschloss gemäß dem Hauptanspruch vorgesehen.

Üblicherweise ist das erste Element als Betätigungshebel ausgebildet, während es sich bei dem zweiten Element um ein Zuziehelement handelt. Beide Elemente wechselwirken mit dem Seilzug, welcher zu diesem Zweck über die zwei Kraftübertragungseinheiten verfügt. Sobald also der Seilzug kraftbeaufschlagt wird, erfahren sowohl der Betätigungshebel als auch das Zuziehelement eine Beaufschlagung über die ihnen jeweils zugeordneten Kraftübertragungseinheiten.

Bei dem Betätigungshebel handelt es sich um einen Innenbetätigungshebel, einen Außenbetätigungshebel, einen Betätigungshaupthebel etc.. Der Innenbetätigungshebel wird regelmäßig von einem Innentürgriff beaufschlagt. Der Außenbetätigungshebel steht demgegenüber mechanisch mit einem Außentürgriff in Wirkverbindung. Der Betätigungshaupthebel mag zwischen den Innenbetätigungshebel und den Außenbetätigungshebel zwischengeschaltet sein oder kann auch von einem motorischen Antrieb beaufschlagt werden.

Sobald also im Beispielfall der Innentürgriff von einem Bediener betätigt wird, erfährt der den Innentürgriff mit dem Innenbetätigungshebel koppelnde Seilzug ebenfalls eine Beaufschlagung. Der Seilzug wird kraftausgelenkt. Als Folge hiervon erfahren sowohl der Innenbetätigungshebel als auch das Zuziehelement bzw. das Zuzieh-/Öffnungselement eine Beaufschlagung.

Wenn also das Zuziehelement im Beispielfall in Eingriff mit dem Gesperre ist und der Innentürgriff von dem Bediener mit Kraft beaufschlagt wird, so sorgt diese Krafteinleitung dafür, dass sowohl der Innenbetätigungshebel eine Betätigung erfährt als auch das Zuziehelement. Als Folge hiervon wird im Regelfall das Gesperre geöffnet und zugleich eine Zuzieheinrichtung mit dem Zuziehelement. in einen wirkungslosen Zustand überführt.

Zu diesem Zweck arbeitet der vom Innentürgriff beaufschlagte Innenbetätigungshebel auf den Auslösehebel, welcher seinerseits die Sperrklinke von der Drehfalle abhebt. Das geschieht durch eine mechanische Kopplung der ersten Kraftübertragungseinheit des Seilzuges mit dem Innenbetätigungshebel. Da der Seilzug über die weitere zweite Kraftübertragungseinheit mit zeitlichem Überlapp mit dem Zuziehelement wechselwirkt, wird das Zuziehelement von seinem Eingriff mit dem Gesperre entfernt. Zu diesem Zweck wird das Zuziehelement meistens von einer Drehfalle weggeschwenkt, mit welcher es zuvor in Eingriff war. - Meistens werden die beschriebenen Maßnahmen jedoch an der Außenbetätigungshebelkette beobachtet, das heißt im Wechselspiel des Außentürgriffes mit dem zugehörigen Außenbetätigungshebel. In diesem Fall beaufschlagt der Außenbetätigungshebel den Auslösehebel und wird durch den ausgelenkten Seilzug zugleich das Zuziehelement von der Drehfalle weggeschwenkt.

Das gelingt besonders vorteilhaft für den Fall, dass das Zuziehelement als an der Drehfalle des Gesperres angreifende Zuziehklinke ausgebildet ist. Meistens ist der Zuziehklinke ein Hebel und insbesondere ein Zuziehhebel zugeordnet, welcher von einem Zuziehantrieb beaufschlagt wird. Sobald die Drehfalle eine bestimmte vorgegebene Position erreicht hat, meistens die Vorraststellung, fällt die Zuziehklinke in eine zugehörige Zuziehkontur an der Drehfalle ein. Zugleich wird der Zuziehantrieb gestartet und beaufschlagt den Hebel bzw. Zuziehhebel derart, dass die an den Hebel angeschlossene Zuziehklinke die Drehfalle von der Vorraststellung in die Endstellung bzw. Hauptraststellung überführt. Kommt es bei diesem Vorgang dazu, dass beispielsweise ein Kleidungsstück im Spalt zwischen der Kraftfahrzeugkarosserie und der zuziehenden Kraftfahrzeugtür eingeklemmt wird, so sorgt eine manuelle Beaufschlagung des Außentürgriffes seitens des Bedieners unmittelbar dafür, dass die Zuziehklinke (von dem zweiten Element) gleichsam ausgeworfen wird und zugleich das Kraftfahrzeug-Türschloss eine Öffnung erfährt.

Dabei müssen beide Vorgänge nicht notwendigerweise zeitgleich und synchron ablaufen, sondern es reicht aus, dass ein zeitlicher Überlapp beobachtet wird und insbesondere die Zuziehklinke die Drehfalle verlassen hat, sobald diese (federunterstützt) in ihre Öffnungsposition nach Abheben der Sperrklinke verschwenkt.

Um die beiden Kraftübertragungseinheiten zu realisieren, ist der Seilzug im Allgemeinen in das erste Element eingehängt, wodurch die erste Kraftübertragungseinheit definiert wird. Bei dem ersten Element handelt es sich im Allgemeinen um den Außenbetätigungshebel, welchem die erste Kraftübertragungseinheit zugeordnet ist. Das hiervon beabstandete zweite Element ist meistens als Zuziehklinke ausgebildet. An dieser Stelle ist der Seilzug mit einer Mitnahmetrommel als zweiter Kraftübertragungseinheit ausgerüstet.

Im Allgemeinen wechselwirkt die Mitnahmetrommel bei Betätigung des Seilzuges mit einem Anschlag an einem Auswerferhebel, welcher seinerseits auf die Zuziehklinke arbeitet. Der Anschlag ist regelmäßig als Bogenanschlag mit Schlitzaufnahme ausgebildet. Durch die Schlitzaufnahme wird größtenteils der Seilzug hindurchgeführt. Das geschieht jenseits der Mitnahmetrommel, welche - wie beschrieben - mit dem Anschlag an dem Auswerferhebel wechselwirkt.

Sobald also die Mitnahmetrommel an dem Anschlag anliegt und auf diese Weise den Auswerferhebel verschwenkt, ist der Auswerferhebel in der Lage, das Zuziehelement bzw. die Zuziehklinke außer Eingriff mit dem Gesperre zu bringen. Zu diesem Zweck fährt der Auswerferhebel bei seiner Beaufschlagung gegen einen Betätigungszapfen des Zuziehelementes. Dadurch wird das Zuziehelement von seinem (eventuellen) Eingriff am Gesperre entfernt.

Der Auswerferhebel kann darüber hinaus funktional und ergänzend zu seiner Wirkverbindung mit der Seele des Seilzuges mechanisch mit einem Innenbetätigungshebel verbunden werden. Dabei ist die Auslegung in der Regel so getroffen, dass der Innenbetätigungshebel über einen Innenbetätigungs-Auswerferhebel bei seiner Betätigung auf den Auswerferhebel für das Zuziehelement arbeitet. Das heißt, eine Beaufschlagung des Innenbetätigungshebels mit Hilfe des Innentürgriffes führt dazu, dass der Innenbetätigungs-Auswerferhebel ebenfalls beaufschlagt wird. Der Innenbetätigungs-Auswerferhebel arbeitet nun auf den Auswerferhebel für das Zuziehelement in vergleichbarer Art und Weise, wie bei einer Beaufschlagung des Seilzuges. Das heißt, dieser Vorgang korrespondiert ebenfalls dazu, dass über den Innenbetätigungs-Auswerferhebel der Auswerferhebel für das Zuziehelement das Zuziehelement mechanisch von dem Gesperre trennt.

In topologischer Hinsicht hat es sich bewährt, wenn das zweite Element bzw. der Auswerferhebel und der (Außen-)Betätigungshebel in einer parallelen Ebene im Vergleich zu einer Gesperreebene angeordnet sind. Demgegenüber finden sich der Innenbetätigungshebel und auch der Innenbetätigungs-Auswerferhebel in einer im Vergleich zur Gesperreebene senkrechten Ebene. Dadurch ist es erforderlich, den Innenbetätigungs-Auswerferhebel vorzusehen, um die Bewegung des Innenbetätigungshebels in der senkrecht im Vergleich zur Gesperreebene angeordneten Ebene in eine Drehbewegung in oder parallel zu dieser Gesperreebene umzuwandeln, mit deren Hilfe dann der dem Zuziehelement zugeordnete Auswerferhebel die gewünschte Beaufschlagung erfährt.

Im Ergebnis wird eine Betätigungsvorrichtung für ein Kraftfahrzeug-Türschloss zur Verfügung gestellt, welche typischerweise zur gemeinsamen Beaufschlagung von einerseits dem Außenbetätigungshebel und andererseits der Zuziehklinke einer Zuzieheinrichtung geeignet und ausgelegt ist. Sobald der Seilzug der Betätigungsvorrichtung also mit einer entsprechenden Kraft (ziehend) beaufschlagt wird, werden sowohl der Außenbetätigungshebel ausgelenkt als auch die Zuziehklinke vom Gesperre abgehoben. Das geschieht im Allgemeinen mit zeitlichem Überlapp, jedenfalls so, dass die Zuziehklinke mechanisch vom Gesperre abgehoben ist, sobald die Drehfalle ihre Öffnungsbewegung (federunterstützt) startet.

Dadurch wird auf einfache Art und Weise ein deutlicher Komfortgewinn beobachtet. Denn etwaige Fehlfunktionen oder Sicherheitsprobleme, beispielsweise während des Zuziehvorganges, können von einem Bediener unmittelbar, schnell und im Rahmen einer intuitiven Vorgehensweise einfach dadurch beendet werden, dass der Bediener den Außentürgriff betätigt. Dadurch wird der Zuziehvorgang unmittelbar unterbrochen, weil das Zuziehelement vom Gesperre mittels des Auswerferhebels abgehoben wird. Zugleich erfährt die solchermaßen beaufschlagte Kraftfahrzeugtür die gewünschte Öffnung. Das alles gelingt schnell und mit wenig konstruktivem sowie montagetechnischen Aufwand, weil der Seilzug als Verbindung zwischen dem Außentürgriff und dem Außenbetätigungshebel sowie der Zuziehklinke respektive dem der Zuziehklinke gleichsam zugeordneten Auswerferhebel mit lediglich zwei Einhängepunkten ausgerüstet wird. Diese Einhängepunkte bzw. Kraftübertragungseinheiten lassen sich unschwer realisieren. Denn die zweite Kraftübertragungseinheit bzw. die an dieser Stelle realisierte Mitnahmetrommel kann bereits werksseitig dem Seilzug angebracht werden, so dass der Seilzug lediglich in den Außenbetätigungshebel zur Realisierung der ersten Kraftübertragungs-einheit bei der Montage eingehängt werden muss. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: die Betätigungsvorrichtung entsprechend der Erfindung in einer schematischen Übersicht und
- **Fig. 2**: ein Kraftfahrzeug-Türschloss mit der erfindungsgemäßen Betätigungsorrichtung in konkreter Gestaltung.

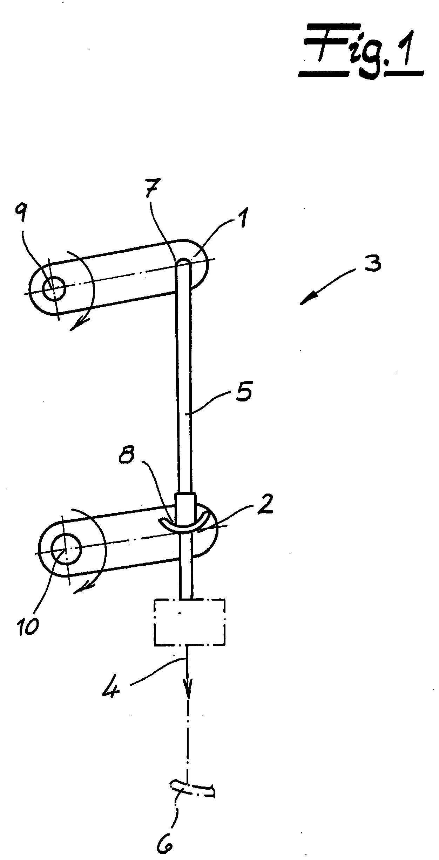

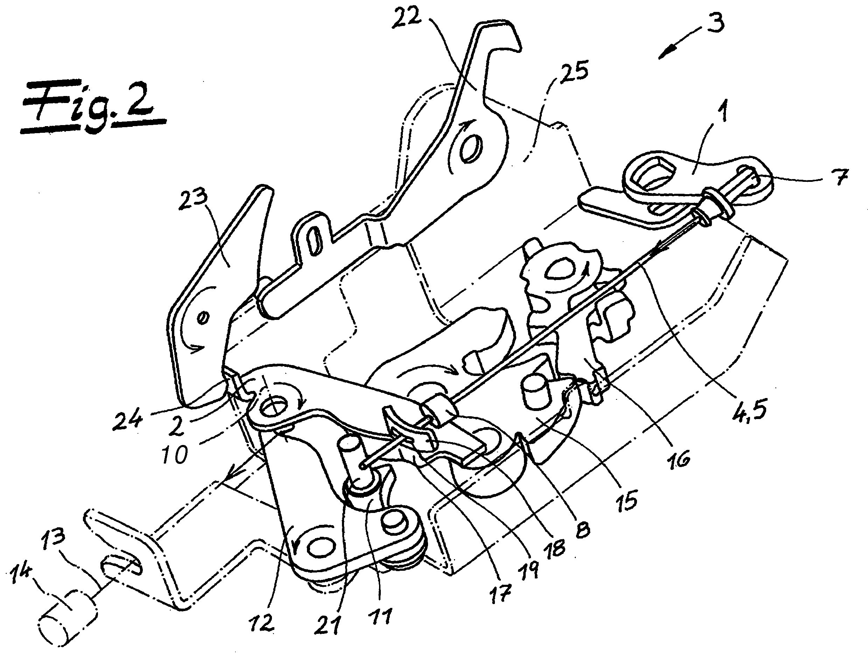

In den Fig. 1 und 2 ist eine Betätigungsvorrichtung zur gemeinsamen Beaufschlagung von wenigstens zwei Elementen 1, 2 eines Kraftfahrzeug-Türschlosses 3 dargestellt. Die Betätigungsvorrichtung verfügt zu diesem Zweck über einen Seilzug 4, 5 als wesentliches Element. Der Seilzug 4, 5 ist mit einer Seele 4 und einer Hülle 5 ausgerüstet.

Bei dem Seilzug 4, 5 handelt es sich im Ausführungsbeispiel um einen Bowdenzug 4, 5. Dessen Hülle 5 ist ortsfest gestaltet und stützt sich an dem Kraftfahrzeug-Türschloss 3 ab. Demgegenüber kann die im Innern der Hülle 5 bewegbare Seele 4 insbesondere eine Zugbewegung von einer Handhabe 6 auf die beiden bereits angesprochenen Elemente 1, 2 des Kraftfahrzeug-Türschlosses 3 ausüben, wie dies ein Pfeil in der Fig. 1 darstellt. Im Rahmen des Ausführungsbeispiels handelt es sich bei der Handhabe 6 um einen Außentürgriff 6, was allerdings nicht einschränkend und zwingend zu verstehen ist.

Die Seele 4 des Seilzuges 4, 5 ist mit wenigstens zwei Kraftübertragungseinheiten 7, 8 in ihrer Längserstreckung ausgerüstet, die voneinander beabstandet sind. Tatsächlich erkennt man anhand der Fig. 1 eine erste Kraftübertragungseinheit 7 endseitig der Seele 4 und eine hiervon beabstandete zweite Kraftübertragungseinheit 8 entlang der Längserstreckung der Seele 4. Bei der ersten Kraftübertragungseinheit 7 handelt es sich um einen Haken oder ein vergleichbares Anschlusselement, mit dessen Hilfe die Seele 4 endseitig in eine Öffnung des ersten Elementes 1 eingehängt wird. Demgegenüber ist die zweite Kraftübertragungseinheit 8 als Mitnahmetrommel 8 ausgelegt, die werksseitig oder auch nachträglich an der Seele 4 angebracht wird.

Die in Längserstreckung der Seele 4 beabstandet zueinander angeordneten Kraftübertragungseinheiten 7, 8 sind zur Wechselwirkung mit einerseits dem ersten Element 1 und andererseits dem zweiten Element 2 bei einer Beaufschlagung der Seele 4 mit Hilfe der Handhabe 6 eingerichtet. Tatsächlich sorgt eine Beaufschlagung der Seele 4 dafür, dass das erste Element 1 bzw. der an dieser Stelle realisierte Außenbetätigungshebel 1 des Kraftfahrzeug-Türschlosses 3 um seine Achse 9 im Uhrzeigersinn verschwenkt wird, wie dies ein Pfeil in Fig. 1 andeutet. Auch das zweite Element 2 erfährt bei einer Beaufschlagung der Seele 4 eine Schwenkbewegung im Uhrzeigersinn um seine zugehörige Achse 10. Bei dem zweiten Element 2 handelt es sich im Beispielfall um einen Auswerferhebel 2, welcher einem Zuziehelement 11 zugeordnet ist. Das Zuziehelement 11 ist mechanisch mit einem Zuziehhebel 12 verbunden. Tatsächlich handelt es sich bei dem Zuziehelement 11 um eine drehbar auf dem Zuziehhebel 12 gelagerte Zuziehklinke 11. Der Zuziehhebel 12 wird über einen lediglich in Fig. 2 angedeuteten Seilzug 13 von einem Zuziehantrieb 14 beaufschlagt. Der Zuziehantrieb 14, der Seilzug 13, der Zuziehhebel 12 und schließlich das Zuziehelement bzw. die Zuziehklinke 11 bilden zusammengenommen eine Zuzieheinrichtung 11, 12, 13, 14.

Wie bereits erläutert, ist das erste Element 1 im Ausführungsbeispiel als Außenbetätigungshebel 1 ausgelegt. Grundsätzlich könnte es sich bei dem ersten Element 1 auch um einen Innenbetätigungshebel oder allgemein einen Betätigungshebel des Kraftfahrzeug-Türschlosses 3 handeln. Das Zuziehelement 11 arbeitet auf ein Gesperre 15, 16, welches sich aus einer Drehfalle 15 und einer mit der Drehfalle 15 in üblicher Art und Weise wechselwirkenden Sperrklinke 16 zusammensetzt. Das Zuziehelement bzw. die Zuziehklinke 11 greift in eine Kontur bzw. Zuziehkontur 17 an der Drehfalle 15 ein, um das Gesperre 15, 16 zuzuziehen. Auf diese Weise wird auch ein zuvor von dem Gesperre 15, 16 gefangener und mit einer Kraftfahrzeugtür verbundener Schließbolzen eingezogen. Die zugehörige Kraftfahrzeugtür bewegt sich schließend auf die Kraftfahrzeugkarosserie zu.

Dieser Vorgang wird mit Hilfe der Zuzieheinrichtung 11, 12, 13, 14 bewerkstelligt. Die Zuzieheinrichtung 11, 12, 13, 14 bzw. der Zuziehantrieb 14 wird im Ausführungsbeispiel dann gestartet, wenn sich die Drehfalle 15 in ihrer Vorraststellung befindet. Dann kann das Zuziehelement bzw. die Zuziehklinke 11 in die Kontur 17 an der Drehfalle 15 einfallen. Zugleich wird der Zuziehantrieb 14 gestartet und beaufschlagt den Seilzug 13 in der in Fig. 2 eingezeichneten Pfeilrichtung. Als Folge hiervon erfährt der Zuziehhebel 12 die ebenfalls in der Fig. 2 angedeutete Gegenuhrzeigersinnbewegung um seine Achse und sorgt dafür, dass die in die Kontur 17 an der Drehfalle 15 eingefallene Zuziehklinke 11 die Drehfalle 15 im angedeuteten Uhrzeigersinn verschwenkt und von der Vorraststellung in die Hauptraststellung überführt.

Kommt es bei dem beschriebenen Zuziehvorgang dazu, dass beispielsweise ein Kleidungsstück zwischen der Kraftfahrzeugtür und der Kraftfahrzeugkarosserie eingeklemmt wird, so kann ein Bediener durch Beaufschlagen der Handhabe bzw. des Außentürgriffes 6 den Zuziehvorgang mechanisch unterbrechen und zugleich die Kraftfahrzeugtür öffnen. Tatsächlich sorgt nämlich die Beaufschlagung des Außentürgriffes 6 für die in Fig. 1 und auch in Fig. 2 angedeutete ziehende Kraftbeaufschlagung der Seele 4 des Seilzugs 4, 5. Als Folge hiervon dreht sich der Außenbetätigungshebel 1 im Uhrzeigersinn (vgl. Fig. 1) und beaufschlagt hierbei einen nicht ausdrücklich dargestellten Auslösehebel, welcher seinerseits die Sperrklinke 16 von der Drehfalle 15 abhebt. Hierzu korrespondiert eine Bewegung der Sperrklinke 16 im Gegenuhrzeigersinn um ihre Achse, wie die Fig. 2 durch einen Pfeil andeutet.

Zuvor bzw. gleichzeitig fährt die Mitnahmetrommel 8 gegen einen Anschlag 18 am zweiten Element 2 bzw. dem der Zuziehklinke 11 zugeordneten Auswerferhebel 2. Der Anschlag 18 ist als Bogenanschlag ausgebildet und verfügt zusätzlich über eine Schlitzaufnahme 19. Durch die Schlitzaufnahme 19 ist die Seele 4 des Seilzuges 4, 5 hindurchgeführt. Tatsächlich durchgreift die Seele 4 die betreffende Schlitzaufnahme 19 jenseits der Mitnahmetrommel 18.

Sobald die Seele 4 mit Hilfe des Außentürgriffes 6 in der dargestellten Pfeilrichtung ziehend beaufschlagt wird, sorgt die gegen den Anschlag 18 fahrende Mitnahmetrommel 8 an der Seele 4 dafür, dass der Auswerferhebel 2 um seine Achse 10 - wie durch einen Pfeil angedeutet - im Uhrzeigersinn verschwenkt wird. Diese Uhrzeigersinnbewegung des Auswerferhebels 2 hat zur Folge, dass die Zuziehklinke 11 von der Kontur 17 an der Drehfalle 15 abgehoben wird. Hierzu verfügt die Zuziehklinke 11 über einen Betätigungszapfen 21, gegen welchen der Auswerferhebel 2 bei seiner Beaufschlagung mit Hilfe der Mitnahmetrommel 8 fährt.

Als Folge hiervon ist der Zuziehantrieb 11, 12, 13, 14 bzw. das Zuziehelement respektive die Zuziehklinke 11 mechanisch vom Gesperre 15, 16 getrennt. Das Gesperre 15, 16 wird also nicht mehr in zuziehendem Sinne beaufschlagt. Dadurch kann die Drehfalle 15 nach Abheben der Sperrklinke 16 federunterstützt öffnen, und zwar indem sie eine Gegenuhrzeigersinnbewegung vollführt - entgegen der Richtung der Zuziehbewegung. Ein zuvor von der Drehfalle 15 gefangener und nicht ausdrücklich dargestellter Schließbolzen kommt frei. Gleiches gilt für eine Kraftfahrzeugtür, an welche der Schließbolzen angeschlossen ist.

Der der Zuziehklinke 11 zugeordnete Auswerferhebel 2 ist nicht nur über die Seele 4 und den Seilzug 4, 5 mit dem Außentürgriff 6 mechanisch verbunden. Sondern der Auswerferhebel 2 kann darüber hinaus funktional und ergänzend mechanisch mit einem Innenbetätigungshebel 22 wechselwirken. Der Innenbetätigungshebel 22 ist seinerseits mit einem nicht dargestellten Innentürgriff mechanisch verbunden. Eine Beaufschlagung des Innentürgriffes führt dazu, dass der Innenbetätigungshebel 22 - wie angedeutet - eine Bewegung im Uhrzeigersinn um seine Achse vollführt. Diese Uhrzeigersinnbewegung des Innenbetätigungshebels 22 bei einer Beaufschlagung des nicht dargestellten Innentürgriffes wird über einen Innenbetätigungs-Auswerferhebel 23 auf den der Zuziehklinke 11 zugeordneten Auswerferhebel 2 übertragen.

Tatsächlich korrespondiert die Uhrzeigersinndrehung des Innenbetätigungshebels 22 dazu, dass der Innenbetätigungs-Auswerferhebel 23 infolgedessen im Gegenuhrzeigersinn rotiert. Dadurch kommt der Innenbetätigungs-Auswerferhebel 23 mit einer Anschlagkante 24 am Auswerferhebel 2 in Eingriff. Das heißt, der Innenbetätigungshebel 22 arbeitet über den Innenbetätigungs-Auswerferhebel 23 bei seiner Beaufschlagung auf den der Zuziehklinke 11 zugeordneten Auswerferhebel 2. Dazu fährt der Innenbetätigungs-Auswerferhebel 23 bei seiner Gegenuhrzeigersinndrehung gegen den Anschlag 24 und sorgt dafür, dass der Auswerferhebel 2 - wie im Falle seiner Beaufschlagung mit Hilfe des Außentürgriffes 6 - im Uhrzeigersinn verschwenkt wird und die Zuziehklinke 11 von der Drehfalle 15 abhebt.

Man erkennt, dass der Auswerferhebel 2 und der Außenbetätigungshebel 1 in einer parallelen Ebene im Vergleich zu einer vom Gesperre 15, 16 aufgespannten Gesperreebene angeordnet sind. Demgegenüber finden sich der Innenbetätigungshebel 22 sowie der Innenbetätigungs-Auswerferhebel 23 in einer im Vergleich zur Gesperreebene senkrechten Ebene. Dazu sind das Gesperre 15, 16 in einem L-Schenkel eines L-förmigen Schlosskastens 25 gelagert, wohingegen der Innenbetätigungshebel 22 und auch der Innenbetätigungs-Auswerferhebel 23 eine Lagerung im anderen L-Schenkel erfahren. Der Auswerferhebel 2 und auch der Außenbetätigungshebel 1 sind demgegenüber in einem nicht ausdrücklich dargestellten und mit dem Schlosskasten 25 verbundenen Schlossdeckel gelagert.

In einem weiteren, nicht dargestellten Ausführungsbeispiel kann die Mitnahmetrommel 8 auch an der Hülle 5 des Seilzuges (4, 5) angeordnet werden.

## Patentansprüche

1. Türschloss (3) für ein Kraftfahrzeug mit einer Betätigungsvorrichtung zur gemeinsamen Beaufschlagung von wenigstens zwei verschiedenen Elementen (1, 2) des Türschlosses (3), mit zumindest einem Seilzug (4, 5) mit Seele (4) und Hülle (5), wobei der Seilzug (4, 5) mit wenigstens zwei Kraftübertragungseinheiten (7, 8) in ihrer Längserstreckung ausgerüstet ist, welche zur Wechselwirkung mit einerseits einem ersten Element (1) und andererseits einem zweiten Element (2) bei Beaufschlagung des Seilzuges (4, 5) eingerichtet sind; und wobei das eine der beiden Elemente (1, 2) als Betätigungshebel (1) ausgebildet ist und es sich bei dem anderen Element (2) um ein auf ein Gesperre (15, 16) arbeitendes Zuzieh- oder Öffnungshilfeelement (11) handelt.

2. Türschloss (3) nach Anspruch 1, **dadurch gekennzeichnet, dass** der Betätigungshebel (1) als Außenbetätigungshebel (1) ausgebildet ist.

3. Türschloss (3) nach Anspruch 1 oder 2, **dadurch gekennzeichnet, dass** das Zuzieh- oder Öffnungshilfeelement (11) als Zuziehelement (11) und Bestandteil einer Zuzieheinrichtung (11, 12, 13, 14) ausgelegt ist.

4. Türschloss (3) nach einem der Ansprüche 1 bis 3, **dadurch gekennzeichnet, dass** das Zuzieh- oder Öffnungshilfeelement (11) als an einer Drehfalle (15) des Gesperres (15, 16) angreifende Zuziehklinke (11) ausgebildet ist.

5. Türschloss (3) nach Anspruch 4, **dadurch gekennzeichnet, dass** der Zuziehklinke (11) ein Hebel, insbesondere ein Zuziehhebel (12), zugeordnet ist, welcher von einem Zuziehantrieb (14) beaufschlagt wird.

6. Türschloss (3) nach Anspruch 2, **dadurch gekennzeichnet, dass** das erste Element (1) als der Außenbetätigungshebel (1) und das hiervon beabstandete zweite Element (2) als das Zuzieh- oder Öffnungshilfeelement (11) beaufschlagender Auswerferhebel (2) ausgebildet ist.

7. Türschloss (3) nach einem der Ansprüche 1 bis 6, **dadurch gekennzeichnet, dass** vorzugsweise die Seele (4) des Seilzuges (4, 5) in das erste Element (1) zur Realisierung der ersten Kraftübertragungseinheit (7) eingehängt ist.

8. Türschloss (3) nach einem der Anspräche 1 bis 7, **dadurch gekennzeichnet, dass** vorzugsweise die Seele (4) des Seilzuges (4, 5) mit einer Mitnahmetrommel (8) als zweite Kraftübertragungseinheit (8) ausgerüstet ist.

9. Türschloss (3) nach Anspruch 8, **dadurch gekennzeichnet, dass** die Mitnahmetrommel (8) bei Betätigung des Seilzuges (4) mit einem Anschlag (18) am zweiten Element (2) wechselwirkt.

10. Türschloss (3) nach Anspruch 9, **dadurch gekennzeichnet, dass** der Anschlag (18) als Bogenanschlag (18) mit Schlitzaufnahme (19) für den hierdurch jenseits der Mitnahmetrommel (8) hindurchgeführten Seilzuges (4, 5) ausgebildet ist.

11. Türschloss (3) nach einem der Ansprüche 1 bis 10, **dadurch gekennzeichnet, dass** das zweite Element (2) bei seiner Beaufschlagung gegen einen Betätigungszapfen (21) des Zuzieh- oder Öffnungshilfeelementes (11) fährt und dieses von seinem Eingriff am Gesperre (15, 16) entfernt.

12. Türschloss (3) nach einem der Ansprüche 1 bis 11, **dadurch gekennzeichnet, dass** das zweite Element (2) funktional und ergänzend mechanisch mit einem Innenbetätigungshebel (22) verbunden ist.

13. Türschloss (3) nach den Ansprüchen 6 und 12, **dadurch gekennzeichnet, dass** der Innenbetätigungshebel (22) über einen Innenbetätigungs-Auswerferhebel (23) bei seiner Betätigung auf den Auswerferhebel (2) arbeitet.

14. Türschloss (3) nach einem der Ansprüche 1 bis 13, **dadurch gekennzeichnet, dass** das zweite Element (2) und der Betätigungshebel (1) in einer parallelen Ebene im Vergleich zu einer Gesperreebene angeordnet sind.

15. Türschloss (3) nach den Ansprüchen 12, 13 und 14, **dadurch gekennzeichnet, dass** der Innenbetätigungshebel (22) zusammen mit dem Innenbetätigungs-Auswerferhebel (23) in einer im Vergleich zur Gesperreebene senkrechten Ebene angeordnet sind.

## Claims

1. Door lock (3) for a motor vehicle having an actuation device for a simultaneous force transmission to at least two different elements (1, 2) of the door lock (3), having at least one Bowden cable (4, 5) with an inner cable (4) and a sheath (5), wherein the Bowden cable (4, 5) is equipped with at least two force transmission units (7, 8) in its longitudinal direction, which are arranged for interacting on the one hand with a first element (1) and on the other hand with a second element (2) when force is applied on the Bowden cable (4, 5); and wherein the one of the two elements (1, 2) is formed as an actuating lever (1) and the other element (2) is a closing or opening auxiliary element (11) that acts on a locking mechanism (15, 16).

2. Door lock (3) according to claim 1, **characterized in that** the actuating lever (1) is formed as an outside actuating lever (1).

3. Door lock (3) according to claim 1 or 2, **characterized in that** the closing or opening auxiliary element (11) is arranged as closing element (11) and as part of a closing device (11, 12, 13, 14).

4. Door lock (3) according to one of the claims 1 to 3, **characterized in that** the closing or opening auxiliary element (11) is formed as a closing pawl (11) that acts on a catch (15) of the closing mechanism (15, 16).

5. Door lock (3) according to claim 4, **characterized in that** a lever, in particular a closing lever (12), is assigned to the closing pawl (11), on which a closing drive (14) acts upon.

6. Door lock (3) according to claim 2, **characterized in that** the first element (1) is formed as the outside actuating lever (1) and the thereof spaced second element (2) as a release lever (2) that acts upon the closing or opening auxiliary element (11).

7. Door lock (3) according to one of the claims 1 to 6, **characterized in that** preferably the inner cable (4) of the Bowden cable (4, 5) is hooked into the first element (1) for realizing the first force transmission unit (7).

8. Door lock (3) according to one of the claims 1 to 7, **characterized in that** preferably the inner cable (4) of the Bowden cable (4, 5) is equipped with a cam barrel (8) as a second force transmission unit (8).

9. Door lock (3) according to claim 8, **characterized in that** the cam barrel (8) interacts with a stop (18) at the second element (2) when the Boden cable (4) is actuated.

10. Door lock (3) according to claim 9, **characterized in that** the stop (18) is formed as a curved stop (18) having a receiving slot (19) for the here through guided Bowden cable (4, 5) beyond the cam barrel (8).

11. Door lock (3) according to one of the claims 1 to 10, **characterized in that** the second element (2) moves against an actuation pin (21) of the closing or opening auxiliary element (11) when force is transmitted to it, and moves it away from its interaction with the closing mechanism (15, 16).

12. Door lock (3) according to one of the claims 1 to 11, **characterized in that** the second element (2) is connected to an inside actuating lever (22) in a functional and in addition mechanical manner.

13. Door lock (3) according to the claims 6 to 12, **characterized in that** the inside actuating lever (22) acts though an inside actuating release lever (23) upon the release lever (2) when it is actuated.

14. Door lock (3) according to one of the claims 1 to 13, **characterized in that** the second element (2) and the actuating lever (1) are arranged in a parallel plane compared to a closing mechanism plane.

15. Door lock (3) according to the claims 12, 13 and 14, **characterized in that** the inside actuating lever (22) is arranged together with the inside actuating release lever (23) in an orthogonal plane compared to the closing mechanism plane.

## Revendications

1. Serrure de portière (3) d'un véhicule à moteur comprenant un dispositif d'actionnement pour agir simultanément sur au moins deux éléments différents (1, 2) de la serrure de portière (3), comprenant au moins un câble de commande (4, 5) avec une âme (4) et une gaine (5), le câble de commande (4, 5) étant muni d'au moins deux unités de transmission de force (7, 8) dans leur extension longitudinale, qui sont adaptées à interagir avec un premier élément (1), d'une part, et un deuxième élément (2), d'autre part, dans le cas de l'action sur le câble de commande (4, 5); et l'un des deux éléments (1, 2) étant conçu comme un levier d'actionnement (1) et l'autre élément (2) étant un élément d'assistance à la fermeture par traction ou à l'ouverture (11) agissant sur un mécanisme d'encliquetage (15, 16).

2. Serrure de portière (3) selon la revendication 1, **caractérisée en ce que** le levier d'actionnement (1) est conçu comme un levier d'actionnement extérieur (1).

3. Serrure de portière (3) selon la revendication 1 ou la revendication 2, **caractérisée en ce que** l'élément d'assistance à la fermeture par traction ou à l'ouverture (11) est conçu comme un élément de fermeture par traction (11) et une partie intégrante d'un dispositif de fermeture par traction (11, 12, 13, 14).

4. Serrure de portière (3) selon l'une des revendications 1 à 3, **caractérisée en ce que** l'élément d'assistance à la fermeture par traction et à l'ouverture (11) est conçu comme un loquet de fermeture par traction (11), qui se met en prise avec le pêne tournant (15) du mécanisme d'encliquetage (15, 16).

5. Serrure de portière (3) selon la revendication 4, **caractérisée en ce qu'**un levier est associé au loquet de fermeture par traction (11), notamment un levier de fermeture par traction (12), sur lequel agit un entraînement de fermeture par traction (14).

6. Serrure de portière (3) selon la revendication 2, **caractérisée en ce que** le premier élément (1) est conçu comme le levier d'actionnement extérieur (1) et le deuxième élément (2) espacé de celui-ci est conçu comme un levier éjecteur (2) agissant sur l'élément d'assistance à la fermeture par traction ou à l'ouverture (11).

7. Serrure de portière (3) selon l'une des revendications 1 à 6, **caractérisée en ce que** l'âme (4) du câble de commande (4, 5) est de préférence suspendue dans le premier élément (1) pour réaliser la première unité de transmission de force (7).

8. Serrure de portière (3) selon l'une des revendications 1 à 7, **caractérisée en ce que** l'âme (4) du câble de commande (4, 5) est de préférence équipée d'un tambour entraîneur (8) comme deuxième unité de transmission de force (8).

9. Serrure de portière (3) selon la revendication 8, **caractérisée en ce que** le tambour entraîneur (8) interagit avec une butée (18) sur le deuxième élément (2), si le câble de commande (4, 5) est actionné.

10. Serrure de portière (3) selon la revendication 9, **caractérisée en ce que** la butée (18) est conçue comme une butée courbée (18) avec un logement en forme de fente (19) destiné au câble de commande (4, 5), qui est guidé à travers le logement en forme de fente (19) de l'autre côté du tambour entraîneur (8).

11. Serrure de portière (3) selon l'une des revendications 1 à 10, **caractérisée en ce que** dans le cas de l'action sur le deuxième élément (2), celui-ci se déplace contre un tenon d'actionnement (21) de l'élément d'assistance à la fermeture par traction et à l'ouverture (11) et le sort de sa prise avec le mécanisme d'encliquetage (15, 16).

12. Serrure de portière (3) selon l'une des revendications 1 à 11, **caractérisée en ce que** le deuxième élément (2) est relié à un levier d'actionnement intérieur (22) de manière fonctionnelle et complémentairement mécanique.

13. Serrure de portière (3) selon les revendications 6 et 12, **caractérisée en ce que** si le levier d'actionnement intérieur (22) est actionné, celui-ci vient en prise avec le levier éjecteur (2) via un levier éjecteur à actionnement intérieur (23).

14. Serrure de portière (3) selon l'une des revendications 1 à 13, **caractérisée en ce que** le deuxième élément (2) et le levier d'actionnement (1) sont disposés dans un plan parallèle par rapport à un plan de mécanisme d'encliquetage.

15. Serrure de portière (3) selon les revendications 12, 13 et 14, **caractérisée en ce que** le levier d'actionnement intérieur (22), ensemble avec le levier éjecteur à actionnement intérieur (23), sont disposés dans un plan vertical par rapport au plan de mécanisme d'encliquetage.
